# EUROPEAN PATENT SPECIFICATION

(11) **EP 1 552 670 B1**
(45) Date of publication and mention of the grant of the patent: **16.05.2007**
(21) Application number: 03798980.3
(22) Date of filing: 12.09.2003
(51) Int. Cl.: H04L 29/12

(54) **METHOD OF AND SYSTEM FOR ESTABLISHING A COMMUNICATION ADDRESS OF A DEVICE**
VERFAHREN UND SYSTEM ZUR FESTSTELLUNG EINER KOMMUNIKATIONSADRESSE EINER EINRICHTUNG
PROCEDE ET SYSTEME D'ETABLISSEMENT D'UNE ADRESSE DE COMMUNICATION D'UN DISPOSITIF

(30) Priority: 07.10.2002 EP 02079150
(43) Date of publication of application: 13.07.2005
(73) Proprietor: Koninklijke Philips Electronics N.V., 5621 BA Eindhoven (NL)
(72) Inventor: BODLAENDER, Maarten, P., NL-5656 AA Eindhoven (NL); COBELENS, Boris, NL-5656 AA Eindhoven (NL)
(74) Representative: Groenendaal, Antonius W. M.
(86) International application number: PCT/IB2003/003931
(87) International publication number: WO 2004/032457

(56) References cited:
- STUART CHESHIRE: "Dynamic Configuration of IPv4 Link-local Addresses" IETF DRAFT, [Online] XP002264519 Retrieved from the Internet: <URL:http://www.ietf.org/proceedings/02jul /I-D/draft-ietf-zeroconf-ipv4-linklocal-05 .txt> [retrieved on 2003-12-10] cited in the application

## Description

The invention relates to a method of establishing a communication address of a device according to claim 1, the method comprising obtaining a main address; using the main address as communication address of the device; monitoring whether a collision occurs when using the main address as communication address; resolving the collision by obtaining a new main address for use as communication address of the device.

The invention further relates to a system for establishing a communication address of a device according to claim 4, the system comprising obtaining means conceived to obtain a main address; using means conceived to use the main address as communication address of the device; monitoring means conceived to monitor whether a collision occurs when using the main address as communication address; resolving means conceived to resolve the collision by obtaining a new main address for use as communication address of the device.

The invention further relates to a computer program product designed to perform such a method.

The invention further relates to a storage device comprising such a computer program product.

An embodiment of such a method and system is generally known from networks running the Internet Protocol (IP) wherein a host needs to have an IP-address to communicate with other hosts. This address is an identifier that represents the host, and therefore it must be unique within the scope of the network. If hosts are being configured manually, it is the responsibility of the network administrator to make sure that all hosts have a unique IP-address. However, it is not desirable to do all configuration manually. Also, manual configuration is not sufficient for dynamic network set-ups. People in an office that work with notebooks might use them at work, as well as at home. If a notebook uses a fixed IP-address, this address must be valid for both networks. This is enabled by the *Dynamic Host Configuration Protocol,* see http://www.ietf org/ of the Internet Engineering Task Force for the Internet Draft Specification. The idea with DHCP is that a host in the network offers a service to manage the IP-configuration. Hosts that need to configure an IP interface can probe for the DHCP server and use it to obtain an IP-address. The DHCP server makes sure that IP-addresses being provided are all unique. DHCP is widely used and it is based on a centralized service. This means that failure of a DHCP server may cause trouble that cannot be solved easily.

An algorithm that does not depend upon a centralized service is specified in the IPv4 Link-Local Addressing (LLA), see http://www.ietf.orgl of the Internet Engineering Task Force for the Internet Draft Specification as specified by the Zeroconf Workgroup. The LLA Specification describes a distributed algorithm in which hosts co-operate to make sure that each host gets assigned a unique IP-address. This can be explained by the following example. A home network comprises a number of devices that communicate with each other. A connection to the outside world can be established through a router or gateway device. The outside world can be the internet, another home network, or in fact any type of network. The term "link-local" refers to the fact that traffic in an LLA-network is isolated from the outside world. There are mainly two measures taken to achieve this: Using a reserved IP-range, which is 0 to 169,254/16 (excluding the first and last 256 addresses); and the fact that IP packets to and from LLA addresses must carry a Total Length Logic (TLL) value of 255. The mechanism to obtain an IP-address is simple. Basically it is a matter of trial-and-error. A host that wants to configure an IP address picks a random address in the LLA address range and checks if the selected address is available within the link-local scope. Still there are situations possible where two hosts turn out to be using the same address. For example when two hosts pick the same address and check at the same time if the selected address is available. To cope with this, there is a collision detection and handling algorithm.

Stuard Cheshire: "Dynamic configuration of Ipv4 link-local addresses", IETF Draft, [Online] XP002264519, http://www.ietf.org, describes a protocol of dynamic configuration of IPv4 link-local addresses. It describes, that upon receiving a conflicting ARP packet, a host may (a) elect to immediately configure a new link-local IP address, or, (b) attempt to defend its address once. If the defense does not help, the host must configure a new link-local IP address.

It is an object of the invention to provide a method according to the preamble of claim 1, that handles collisions in an improved way. To achieve this object the method is characterized in that the method comprises: obtaining a backup address; and resolving the collision comprises using the backup address as communication address of the device if the collision with the main address occurs.

The advantage of using backup addresses is that when a collision occurs, a new address can be used at once without having to wait and obtain a new IP-address which can take up to several seconds. For example, with the LLA Protocol, a device must immediately drop its old address and obtain a new address in the case of a collision. It has to check the availability of the new address for eight seconds. As a result, the device cannot communicate during these seconds.

An embodiment of the method according to the invention is described in claim 2. By maintaining an open connection with the device that has changed from IP-address, an application that receives information can continue processing the information. For example, an audio or video processing application can continue streaming without significant interruption.

An embodiment of the method according to the invention is described in claim 3. By obtaining a new backup address if a collision occurs with this backup address, it can be prevented that the backup address is claimed by a device preventing other devices from using it. An other advantage is that it can be prevented that the backup address collides with the IP-address of an other host by the time the backup address is going to be used.

It is an object of the invention to provide a system according to the preamble of claim 4 that handles collisions in an improved way. To achieve this object the system is characterized in that the obtaining means is further conceived to obtain a backup address; and the resolving means is further conceived to use the backup address as communication address of the device if the collision with the main address occurs.

Embodiments of the system according to the invention are described in claims 5 and 6.

These and other aspects of the invention will be apparent from and elucidated with reference to the embodiments described hereinafter as illustrated by the following Figures:
Figure 1 illustrates the main steps of the LLA configuration algorithm;
Figure 2 illustrates the main steps of the backup algorithm;
Figure 3 illustrates the main parts of a system according to the invention in a schematic way;
Figure 4 illustrates internet-enabled devices comprising the system according to the invention in a schematic way.

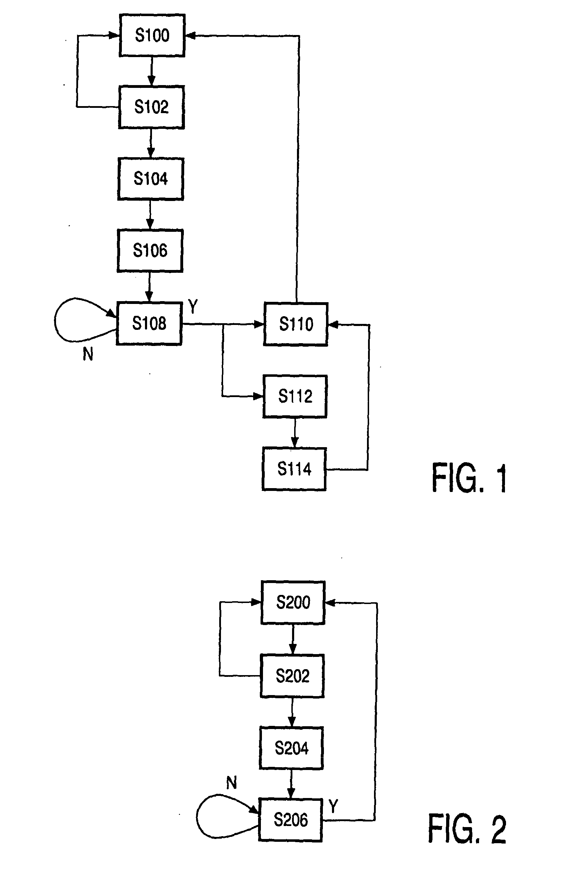

Figure 1 illustrates the main steps of the LLA protocol to handle IP configuration. The steps are based upon an trial-and-error algorithm, wherein hosts that want to configure an IP address pick a random address in the LLA address range and checks if the selected address is available within the link-local scope. Still there are situations possible where two hosts turn out to be using the same address, so there is a collision detection and handling algorithm to cope with this. Remark, that the numbers and seconds used below are merely an example and are not intended to limit the invention.

Within step S 100 a random IP address within the LLA address range is chosen by a host. For LLA the 169.254/16 address range has been reserved. The first and last 256 addresses are not used, so an address in the range 169.254.1.0-169.254.254.255 is selected. Addresses must be selected randomly, and it is advised to use persistent information to calculate the seed value of the random number generator. Hashing the ethernet hardware address to a seed value is given as an example. This way preferably the same sequence of addresses can be generated in each new run of the protocol, which means that a host does not necessarily have a new address each time it boots. The advantage is that the network configuration is, to a certain extent, static.

Within step S102 the availability of the IP-address is checked by probing. Once the host has selected an IP address, it must check whether or not the address is occupied. This is done by probing. This means that the hosts sends an Address Resolution Protocol (ARP) request packets for the address it wants to use. Currently, on Ethernet 4 such probes must be sent with a delay of 2 seconds after each probe. Probing fails if the host receives:
- any ARP packet where the sender IP address is the address being probed for; or
- any ARP packet where the target IP address is the address probing for, and the sender hardware address is not the hardware address of any of the host's interfaces.

In either case step S 100 must be performed again with a different IP address. However, after at least the 10th attempt to get an address, only 1 attempt per minute is allowed. This way ARP storms can be avoided in situations where lots of collisions occur and hosts are not able to find a legal address.

Currently, to obtain an IP address in an Ethernet network, there must be done 4 probes with 2 seconds delay, as previously described. This means that it takes at least 8 seconds to get a valid IP address, if no collision occurs. There are a few trivial things that can be done to reduce the waiting:
- shorten the delay between the probes;
- decrease the number of probes; and
- a combination of both.

The chance that probe packets get lost, reply packets get lost, and the chance that probes are replied in a short amount of time, highly depends on the underlying network. To make the protocol reliable for every hardware type and network setup, enough probes must be performed with a sufficient delay. Shortening the probe times is also an example of shortening the time before an IP-address becomed valid. Other examples are also feasible.

Within step S104, the IP-address is used if probing was successful. If probing the address did not result in a collision, the hardware interface can be configured to use the address. From now on incoming ARP packets must be checked to see if there are collisions with the host's IP-address. A collision occurs if an ARP packet is received where the sender IP address is equal to the host's own IP address and the sender hardware address is not the hardware address of any of our interfaces.

Within step S106, the host announces that the selected IP-address is being used. The address that is selected may have been used before by another host, and then ARP caches of hosts in the network possibly contain stale entries. To update them, 2 gratuitous ARP packets with a 2 seconds delay between must be sent.

Within step S 108, the host regularly checks if a collision with its IP-address occurs. At this point a new IP address was successfully configured, ARP cache entries of other hosts in the network were updated, and the host starts waiting for collisions.

If a collision occurs there are two possibilities. The first possibility is to drop the IP address within step S 110 and return to step S100. The second possibility is to defend the IP-address within step S 112 to hopefully maintain it. The latter is useful if there are important connections that should not be lost because of IP changes. For example TCP/IP connections get lost if this happens. Defending an address means that a gratuitous ARP packet must be sent and then the host must wait for 10 seconds within step S 114. If during that time another collision is detected, the defense failed and the IP address must be dropped within step S110.

When a device loses its IP address, it must find a new one as soon as possible. As long as there is no new address, the device will not be able to communicate, which results in interrupted streams and other similar problems. With LLA the device must pick a new address and check its availability for 8 seconds, according to the protocol specification. Losing an address means that preferably the address must be dropped right away, without getting a new one first. As a result, the device needs to wait at least 8 seconds before it is able to communicate again. To reduce the delay problem, a backup address can be used. The backup address is selected and probed for at the same time as the main address, and then stored until it is needed. Basically this means that because step S102 is the most time consuming part of the process, step S 100 and S 102 are done in advance. Once a collision occurs, the backup address can replace the colliding main address immediately, and the device can stay online without having to probe for a new address. The modified protocol basically exists of two parallel algorithms: the main steps of the LLA algorithm as illustrated in Figure 1 and the main steps of the backup algorithm as illustrated in Figure 2.

Within Step S200 a random IP address in the LLA address range is chosen for the backup IP-address. Within Step S202 the availability of the backup IP-address is checked by probing. Then, the backup IP-address is stored as backup address if probing is successful within step S204. Finally, within step S206, the host waits until a new backup address is needed because of a collision. If a new backup IP-address is needed, step S200 is performed.

With this algorithm, the backup address is being watched by the collision detection mechanism. Once the device receives an ARP packet that carries the backup address as either the source or destination, it must drop the backup address and find another one. This way it is ensured that the backup address is not colliding with any other host by the time it is going to be used.

An advantage of using backup addresses is that when a collision occurs, a new address can be used without having to wait unnecessarily. The backup address can be announced as the new main address within step S106, if a notification functionality is added to the network. Protocols or applications can then take proper action to maintain open connections. If a host has found a backup address, and it can find a new one after a collision before another collision occurs, stable IP connectivity is enabled. The, for example audio and video streaming can continue without any interruption.

As said before, if a device receives any ARP packet that contains its backup address as either the source or destination, the address is preferably dropped and another backup address is found. Note that this can also count for probe packets that match the backup address. This way it is avoided that the backup address is claimed by the device. Any device trying to obtain an address that is used as a backup address on another device, will not notice anything of this.

The following examples illustrate the network traffic caused by using the backup address:

Example 1. Assume device A using address X as its main address, and device B trying to probe for the same address as either main address or backup address. Once device B sends a probe, host A will reply and B notices that address X is not available. B will pick another address and start probing for it. The result is that 5 packets will be sent by B and 1 by A, making a total of 6 packets.

Example 2. Assume device A using address X as its backup address, and device B trying to probe for the same address as either main address or backup address. Address X is not claimed by A, so if device B probes for X, A will drop it and try to find another address. Device B will continue probing for X to obtain it, so the result is that both A and B will both send at least 4 probes. Also because now two hosts are probing for an address, there is a larger chance that there will be more probes because one of them fails to find a suitable address.

An advantage of recovering from a collision using backup addresses is that it is a simple and effective way without increasing the complexity of the protocol implementation very much. It requires no modifications to the protocol specification, and there is good interoperability between devices that use backup addresses and hosts that do not use it.

The order in the described embodiments of the method of the current invention is not mandatory, a person skilled in the art may change the order of steps or perform steps concurrently using threading models, multi-processor systems or multiple processes without departing from the concept as intended by the current invention.

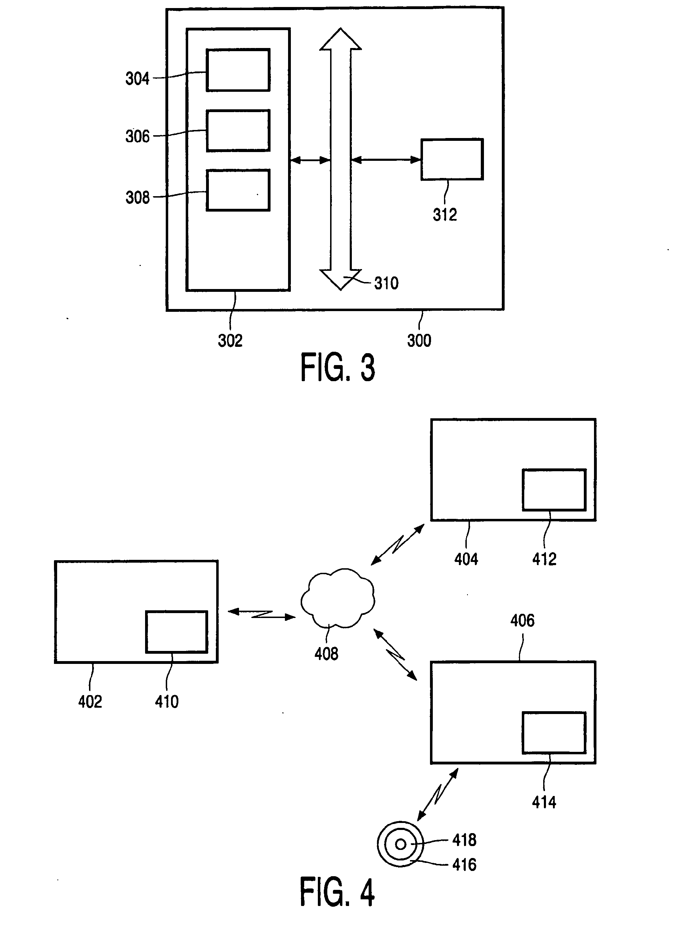

Figure 3 illustrates the main parts of a system according to the invention in a schematic way. The system 300 comprises a random access memory 302, a software bus 310, and a central processing unit 312. The memory 302 can communicate with the central processing unit 312 via software bus 310. The memory 302 comprises computer readable code 304, 306, and 308. The computer readable code 304 is designed to probe for an IP-address and a backup IP-address as previously described. The computer readable code 304 is further designed to drop the backup IP-address in the case of a collision and probe for a new backup IP-address as previously described. The computer readable code 306 is designed to use the probed IP-address, which can be either the originally probed IP-address as the backup IP-address. The computer readable code 308 is designed to maintain an open connection in the case that a host switches from IP-address as previously described. The system is described by means of example as a software system. However, dedicated hardware or combinations of software with hardware, like programmable hardware that is designed to perform the mentioned method steps is included too.

Figure 4 illustrates internet-enabled devices comprising the system according to the invention in a schematic way. An internet-enabled television set 402 comprises the system according to the invention 410 and is bilaterally connected via an ethernet connection 408 to a personal digital assistant 404. The personal digital assistant comprises 404 a system according to the invention 412 and is bilaterally connected via the ethernet connection 408 to a personal computer 406. The personal computer 406 comprises a system according to the invention 414 and is bilaterally connected to the television set 402. The personal computer 406 can download the computer readable code 418 from that is designed to perform the method according to the invention as previously described. The computer readable code 418 can be read by the personal computer 406 from a storage device 416, like a CD, CD+RW, DVD, etc. The television set 402, personal digital assistant 404, and personal computer 406 are examples of internet-enabled devices. Other devices that are internet-enabled are also feasible like for example a mobile phone.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the system claims enumerating several means, several of these means can be embodied by one and the same item of computer readable software or hardware. The mere fact that certain measures are recited in mutually different dependent claims does not indicate that a combination of these measures cannot be used to advantage.

## Claims

1. Method of establishing a communication address of a device, the method comprising:
obtaining (S100) a main address;
using (S104) the main address as communication address of the device;
monitoring (S108) whether a collision occurs when using the main address as communication address;
**characterized in that** the method comprises:
obtaining (S200) a backup address before the collision occurs;
checking (S202) an availability of the backup address by probing before the collision occurs;
resolving (S1 10) the collision by using the backup address as communication address of the device if the collision with the main address occurs.

2. Method according to claim 1, the method comprising maintaining an open connection with the device when changing the communication address.

3. Method according to claim 1, the method comprising obtaining a new backup address if a collision occurs with the backup address.

4. System for establishing a communication address of a device, the system comprising:
means (304) adapted to obtain a main address;
means (306) adapted to use the main address as communication address of the device;
means adapted to monitor whether a collision occurs when using the main address as communication address;
**characterized in that**:
the means (304) adapted to obtain a main address is further adapted to obtain a backup address before the collision occurs, and to check an availability of the backup address by probing before the collision occurs;
the system further comprises means adapted to resolve the collision by using the backup address as communication address of the device if the collision with the main address occurs.

5. System according to claim 4, the system comprising means (308) adapted to maintain an open connection with the device when changing the communication address.

6. System according to claim 4, wherein the means adapted to obtain the main address and the backup address, is further adapted to obtain a new backup address if a collision occurs with the backup address.

7. A computer program product comprising instructions which when executed by a computer adapt the computer to perform the method according to claim 1.

8. A storage device comprising the computer program product according to claim 7.

## Patentansprüche

1. Verfahren zum Feststellen einer Kommunikationsadresse einer Anordnung, wobei das Verfahren die nachfolgenden Verfahrensschritte umfasst:
- das Erhalten (S 100) einer Hauptadresse,
- das Verwenden (S 104) der Hauptadresse als Kommunikationsadresse der Anordnung,
- das Überwachen (S 108), ob ein Zusammenstoß auftritt, wenn die Hauptadresse als Kommunikationsadresse verwendet wird,
**dadurch gekennzeichnet, dass** das Verfahren die nachfolgenden Verfahrensschritte umfasst:
- das Erhalten (S200) einer Sicherungsadresse bevor der Zusammenstoß auftritt,
- das Überprüfen (S202) einer Verfügbarkeit der Sicherungsadresse durch Erforschung bevor der Zusammenstoß auftritt,
- das Auflösen (S 110) des Zusammenstoßes durch Verwendung der Sicherungsadresse als Kommunikationsadresse der Anordnung, wenn der Zusammenstoß mit der Hauptadresse auftritt.

2. Verfahren nach Anspruch 1, wobei das Verfahren das Beibehalten einer offenen Verbindung mit der Anordnung umfasst, wenn die Kommunikationsadresse sich ändert.

3. Verfahren nach Anspruch 1, wobei das Verfahren das Erhalten einer neuen Sicherungsadresse umfasst, wenn ein Zusammenstoß mit der Sicherungsadresse auftritt.

4. System zum Feststellen einer Kommunikationsadresse einer Anordnung, wobei das System die nachfolgenden Elemente umfasst:
- Mittel (304), vorgesehen zum Erhalten einer Hauptadresse,
- Mittel (306), vorgesehen zum Verwenden der Hauptadresse als Kommunikationsadresse der Anordnung,
- Mittel, vorgesehen zum Überwachen, ob ein Zusammenstoß auftritt, wenn die Hauptadresse als Kommunikationsadresse verwendet wird,
**dadurch gekennzeichnet, dass**
- die Mittel (304), vorgesehen zum Erhalten einer Hauptadresse weiterhin dazu vorgesehen sind, eine Sicherungsadresse zu erhalten, und zwar bevor der Zusammenstoß auftritt, durch Überprüfung bevor der Zusammenstoß auftritt;
- das System weiterhin Mittel aufweist, die vorgesehen sind um den Zusammenstoß aufzulösen durch Verwendung der Sicherungsadresse als Kommunikationsadresse der Anordnung, wenn der Zusammenstoß mit der Hauptadresse auftritt..

5. System nach Anspruch 4, wobei das System Mittel (308) aufweist, vorgesehen zum Beibehalten einer offenen Verbindung mit der Anordnung, wenn die Kommunikationsadresse sich ändert.

6. System nach Anspruch 4, wobei die Mittel, vorgesehen zum Erhalten der Hauptadresse und der Sicherungsadresse weiterhin dazu vorgesehen sind, eine neue Sicherungsadresse zu erhalten, wenn ein Zusammenstoß mit der Sicherungsadresse auftritt.

7. Computerprogrammprodukt mit Instruktionen, die, wenn von einem Computer durchgeführt, den Computer anpassen um das Verfahren nach Anspruch 1 durchzuführen.

8. Speicheranordnung mit dem Computerprogrammprodukt nach Anspruch 7.

## Revendications

1. Procédé pour établir une adresse de communication d'un dispositif, le procédé comprenant :
l'obtention (S100) d'une adresse principale ;
l'utilisation (S 104) de l'adresse principale comme moyen de communication du dispositif ;
la surveillance (S 108) de collision pouvant se produire lorsque l'adresse principale est utilisée comme adresse de communication ;
**caractérisé en ce que** le procédé comprend :
l'obtention (S200) d'une adresse de réserve avant la collision pouvant se produire ;
la vérification (S202) d'une disponibilité de l'adresse de réserve par sondage avant la collision pouvant se produire ;
la résolution (S110) de la collision par l'utilisation de l'adresse de réserve comme adresse de communication du dispositif si la collision avec l'adresse principale se produit.

2. Procédé selon la revendication 1, le procédé comprenant la garde d'une connexion ouverte avec le dispositif lors d'un changement d'adresse de communication.

3. Procédé selon la revendication 1, le procédé comprenant l'obtention d'une nouvelle adresse de réserve si une collision se produit avec l'adresse de réserve.

4. Système pour établir une adresse de communication d'un dispositif, le système comprenant :
un moyen (304) adapté pour obtenir une adresse principale ;
un moyen (306) adapté pour utiliser l'adresse principale comme adresse de communication du dispositif;
un moyen adapté pour surveiller une collision pouvant se produire lors de l'utilisation de l'adresse principale comme adresse de communication ;
**caractérisé en ce que** :
le moyen (304) adapté pour obtenir une adresse principale est en outre adapté pour obtenir une adresse de réserve avant que la collision ne se produise, et pour vérifier, par sondage, une disponibilité de l'adresse de réserve avant que la collision ne se produise ;
le système comprend en outre un moyen adapté pour résoudre la collision par l'utilisation de l'adresse de réserve comme adresse de communication du dispositif si la collision avec l'adresse principale se produit.

5. Système selon la revendication 4, le système comprenant un moyen (308) adapté pour maintenir une connexion ouverte avec le dispositif lors d'un changement d'adresse de communication.

6. Système selon la revendication 4, dans lequel le moyen adapté pour obtenir l'adresse principale et l'adresse de réserve est adapté en outre pour obtenir une nouvelle adresse de réserve si une collision se produit avec l'adresse de réserve.

7. Logiciel comprenant des instructions qui, lorsqu'elles sont exécutées par un ordinateur, adaptent cet ordinateur à l'exécution du procédé selon la revendication 1.

8. Dispositif de stockage comprenant le logiciel selon la revendication 7.
